# EUROPÄISCHE PATENTSCHRIFT

(11) **EP 3 592 958 B1**
(45) Veröffentlichungstag und Bekanntmachung des Hinweises auf die Patenterteilung: **17.02.2021**
(21) Anmeldenummer: 17809187.2
(22) Anmeldetag: 28.11.2017
(51) Int. Cl.: F01N 3/20, F01N 3/035, F01N 3/10

(54) **MISCHEINRICHTUNG ZUR EINBRINGUNG EINER FLÜSSIGKEIT IN EINEN ABGASSTROM, BRENNKRAFTMASCHINE MIT EINER SOLCHEN MISCHEINRICHTUNG UND VERFAHREN ZUM EINBRINGEN EINER FLÜSSIGKEIT IN EINEN ABGASSTROM**
MIXING DEVICE FOR INTRODUCING A LIQUID INTO AN EXHAUST GAS STREAM, INTERNAL COMBUSTION ENGINE HAVING A MIXING DEVICE OF THIS TYPE, AND METHOD FOR INTRODUCING A LIQUID INTO AN EXHAUST GAS STREAM
DISPOSITIF DE MÉLANGE DESTINÉ À AMENER UN LIQUIDE DANS UN FLUX DE GAZ D'ÉCHAPPEMENT, MOTEUR À COMBUSTION INTERNE POURVU D'UN TEL DISPOSITIF DE MÉLANGE ET PROCÉDÉ D'AMENER UN LIQUIDE DANS UN FLUX DE GAZ D'ÉCHAPPEMENT

(30) Priorität: 07.03.2017 DE 102017203747
(43) Veröffentlichungstag der Anmeldung: 15.01.2020
(73) Patentinhaber: MTU Friedrichshafen GmbH, 88045 Friedrichshafen (DE)
(72) Erfinder: MÜLLER, Ralf, 88693 Deggenhausertal (DE); KLAAS, Philipp, 88045 Friedrichshafen (DE); MALETIC, Boban, 88046 Friedrichshafen (DE); MICK, Daniel, 86489 Deisenhausen (DE)
(74) Vertreter: Kordel, Mattias
(86) Internationale Anmeldenummer: PCT/EP2017/001381
(87) Internationale Veröffentlichungsnummer: WO 2018/162019

(56) Entgegenhaltungen:
- EP-A1- 1 374 976
- EP-A1- 2 927 443
- DE-A1-102009 038 546
- DE-U1- 29 825 250

## Beschreibung

Die Erfindung betrifft eine Mischeinrichtung zur Einbringung einer Flüssigkeit in einen Abgasstrom, eine Brennkraftmaschine mit einer solchen Mischeinrichtung und ein Verfahren zum Einbringen einer Flüssigkeit in einen Abgasstrom.

Bei der Einbringung von Flüssigkeiten in einen Abgasstrom - beispielsweise von einem Reduktionsmittel für die selektive katalytische Reduktion von Stickoxiden, oder von Brennstoff - wird typischerweise eine möglichst homogene Durchmischung angestrebt. Hierfür bedarf es langer Mischstrecken, für deren Einsatz jedoch nicht immer genug Bauraum vorhanden ist. Alternativ ist es auch möglich, Mischelemente im Strömungspfad des Abgasstroms anzuordnen, die jedoch zu einer Erhöhung des Abgasgegendrucks führen und sich somit nachteilig insbesondere auf den Betrieb einer den Abgasstrom emittierenden Brennkraftmaschine auswirken. Insbesondere ist der erhöhte Abgasgegendruck mit Leistungsverlusten für die Brennkraftmaschine verbunden.

EP1374976 A1 beschreibt eine Trägergas-unterstützte Zerstäubung eines Ammoniak-WasserGemisches in einem Abgasstrom.

DE102009038546 A1 beschreibt die Mischung von Druckluft und einer Harnstoff-Wasser-Lösung in einer Mischkammer vor Einspritzung in ein Abgassystem.

Der Erfindung liegt die Aufgabe zugrunde, eine Mischeinrichtung zur Einbringung einer Flüssigkeit in einen Abgasstrom, eine Brennkraftmaschine mit einer solchen Mischeinrichtung und ein Verfahren zum Einbringen einer Flüssigkeit in einen Abgasstrom zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem eine Mischeinrichtung zur Einbringung einer Flüssigkeit in einen Abgasstrom gemäß Anspruch 1 geschaffen wird, welche einen Abgasleitungsabschnitt aufweist, der eingerichtet ist zur Führung von Abgas - insbesondere einer Verbrennung - entlang des Abgasleitungsabschnitts. Die Mischeinrichtung weist außerdem eine Dosiereinrichtung auf, die angeordnet und eingerichtet ist zur Einbringung, insbesondere zur Eindosierung, einer Flüssigkeit in den Abgasleitungsabschnitt. Es ist vorgesehen, dass die Mischeinrichtung wenigstens eine Schallquelle aufweist, die derart relativ zu dem Abgasleitungsabschnitt und relativ zu der Dosiereinrichtung angeordnet ist, dass eine Durchmischung der in den Abgasleitungsabschnitt mittels der Dosiereinrichtung eingebrachten Flüssigkeit mit dem in dem Abgasleitungsabschnitt strömenden Abgas durch von der Schallquelle emittierten Schall gefördert wird, wenn die Schallquelle Schall emittiert. Mithilfe der Schallquelle und insbesondere mithilfe des von der Schallquelle emittierten Schalls kann so die Durchmischung der Flüssigkeit mit dem Abgas gefördert und verbessert werden, sodass es keiner langen Mischstrecke mehr bedarf. Auch mechanische Mischelemente können bevorzugt entfallen, sodass der Abgasgegendruck trotz kurzer Mischstrecke nicht in nachteiliger Weise erhöht wird.

Der Abgasleitungsabschnitt ist insbesondere eingerichtet zur Führung von Abgas einer Verbrennung einer Brennkraftmaschine. Insbesondere ist es möglich, dass der Abgasleitungsabschnitt eingerichtet ist zur Verwendung in einem Abgasstrang einer Brennkraftmaschine.

Dass die Dosiereinrichtung zur Einbringung oder Eindosierung einer Flüssigkeit in den Abgasleitungsabschnitt angeordnet und eingerichtet ist, bedeutet insbesondere, dass die Dosiereinrichtung derart an oder in dem Abgasleitungsabschnitt angeordnet und so ausgebildet ist, dass sie eine Flüssigkeit in den Abgasstrom, der im Betrieb des Abgasleitungsabschnitts in diesem strömt, einbringen oder eindosieren kann.

Die Flüssigkeit kann bevorzugt ein Reduktionsmittel, insbesondere zur Verwendung in Zusammenhang mit einer selektiven katalytischen Reduktion von Stickoxiden, vorzugsweise eine Hamstoff-Wasser-Lösung; ein Brennstoff, insbesondere eine aromatische oder aliphatische Flüssigkeit, oder ein Gemisch hiervon, bevorzugt Benzin, Diesel, Dimethylether oder dergleichen; Wasser; oder eine andere geeignete, mit dem Abgasstrom zu durchmischende Flüssigkeit sein. Die Vorteile der Erfindung verwirklichen sich in besonderer Weise mit einer als Reduktionsmittel für die selektive katalytische Reduktion ausgebildeten Flüssigkeit, da hier stromaufwärts eines SCR-Katalysators typischerweise ansonsten lange Mischstrecken oder den Abgasgegendruck steigernde Mischelemente erforderlich sind, um eine für die selektive katalytische Reduktion günstige, homogene Durchmischung des Reduktionsmittels mit dem Abgas zu erreichen.

Gemäß der Erfindung ist vorgesehen, dass die Schallquelle als Infraschallquelle ausgebildet ist. Dabei ist eine Infraschallquelle insbesondere eine Schallquelle, die eingerichtet ist, um Schall mit einer Frequenz von weniger als 30 Hz, vorzugsweise von weniger als 20 Hz zu emittieren. Mittels Infraschall ist es in besonders effizienter Weise möglich, im Abgasstrom Pulsationen und/oder Turbulenzen zu erzeugen, die zu Relativbewegungen zwischen dem Abgas einerseits und Tröpfchen der eingedüsten Flüssigkeit andererseits führen, insbesondere da die Flüssigkeitströpfchen einerseits und das Abgas andererseits verschiedene Dichten aufweisen und daher durch Infraschallwellen in Relativbewegung zueinander versetzt werden. Dies fördert in besonders günstiger Weise eine homogene Durchmischung der Flüssigkeit mit dem Abgas. Zugleich bewirken Infraschallwellen darüber hinaus, dass Ablagerungen in dem Abgasleitungsabschnitt und/oder in angrenzenden Abschnitten eines Abgasstrangs von Wandungen desselben gelöst und von dem Abgasstrom mitgerissen und damit entfernt werden, wobei insbesondere Ruß- und/oder Ascheablagerungen - gegebenenfalls auch von einem SCR-Katalysator - entfernt werden können. Neben dem günstigen Effekt auf die Durchmischung der Flüssigkeit mit dem Abgas führt die Verwendung einer Infraschallquelle also zusätzlich in besonders vorteilhafter Weise zu einer Reinigung zumindest des Abgasleitungsabschnitts, gegebenenfalls auch angrenzender Bereiche eines Abgaspfads.

Gemäß einer Weiterbildung der Erfindung ist vorgesehen, dass die Schallquelle als Schallhorn ausgebildet ist. Alternativ ist es auch möglich, dass die Schallquelle als Lautsprecher ausgebildet ist. Sowohl ein Schallhorn als auch ein Lautsprecher stellen effiziente wie auch kostengünstige Ausgestaltungen einer Infraschallquelle dar. Ist die Schallquelle als Lautsprecher ausgebildet, weist dieser vorzugsweise eine gegenüber typischerweise im Abgas von Verbrennungen, insbesondere im Abgas von Brennkraftmaschinen auftretenden Temperaturen beständige Membran, vorzugsweise eine entsprechend temperaturbeständige Metallmembran auf. Es ist in diesem Fall sogar möglich, dass die Membran des Lautsprechers in unmittelbarem Kontakt mit dem Abgasstrom ist, sodass Infraschallwellen besonders effizient von dem Lautsprecher in den Abgasstrom eingekoppelt werden können. Vorzugsweise ist die Membran des Lautsprechers temperaturbeständig bis mindestens 600 °C, vorzugsweise bis mindestens 800 °C, besonders bevorzugt bis mindestens 1000 °C.

Aus der deutschen Offenlegungsschrift DE 10 2012 108 183 A1 geht eine grundsätzlich zur Erzeugung von Infraschall geeignete Schallquelle hervor, die als Impulsdetonationsvorrichtung ausgebildet ist. Insofern ist auch die hier vorgeschlagene Schallquelle gemäß einer bevorzugten Ausgestaltung als Impulsdetonationsvorrichtung ausgebildet. Die aus dem Stand der Technik bekannte Schallquelle ist allerdings lediglich eingerichtet und angeordnet zur Reinigung von Oberflächen und nicht etwa zur Förderung einer Durchmischung einer Flüssigkeit mit Abgas. Im Übrigen zeigt sich, dass insbesondere für eine kontinuierliche Durchmischung einer Flüssigkeit mit Abgas, insbesondere in Zusammenhang mit der Einbringung eines Reduktionsmittels oder eines Brennstoffs in einen Abgasstrom, ein Schallhorn oder ein Lautsprecher als dauerhaft zu betreibende Schallquellen geeigneter sind als eine Impulsdetonationsvorrichtung.

Gemäß einer Weiterbildung der Erfindung ist vorgesehen, dass die Schallquelle an einer Wandung des Abgasleitungsabschnitts angeordnet ist. Dabei ist es möglich, dass die Schallquelle außen an der Wandung angeordnet ist und nicht in das Innere des Abgasleitungsabschnitts eingreift. Es ist dann möglich, dass die Schallquelle eingerichtet ist, um die Wandung des Abgasleitungsabschnitts von außen mit Infraschall zu beaufschlagen und dadurch insbesondere in Schwingung zu versetzen, wobei sich der Infraschall über die Wandung auch in den in dem Abgasleitungsabschnitt strömenden Abgasstrom fortsetzen und dort die Durchmischung der Flüssigkeit mit dem Abgasstrom fördern kann.

Alternativ ist bevorzugt vorgesehen, dass die Schallquelle mit einer Schallauslassöffnung in den Abgasleitungsabschnitt mündet. Auf diese Weise ist es in besonders effizienter Weise möglich, Infraschall in den in dem Abgasleitungsabschnitt strömenden Abgasstrom einzukoppeln. Es ist möglich, dass die Schallauslassöffnung stromaufwärts oder stromabwärts der Dosiereinrichtung in den Abgasleitungsabschnitt mündet. Je nach konkreter Ausgestaltung der Mischeinrichtung können sich beide verschiedenen Anordnungen der Schallauslassöffnung als besonders effizient oder vorteilhaft erweisen. Da sich Infraschall schnell und mit äußerst geringer Dämpfung in dem Abgasstrom ausbreitet, kann eine effiziente Durchmischung der Flüssigkeit mit dem Abgasstrom sowohl bei stromaufwärtiger als auch bei stromabwärtiger Anordnung der Schallauslassquelle relativ zu der Dosiereinrichtung erreicht werden. Es ist auch möglich, dass die Schallquelle mehr als eine Schallauslassöffnung aufweist, wobei vorzugsweise eine erste Schallauslassöffnung stromaufwärts der Dosiereinrichtung und eine zweite Schallauslassöffnung stromabwärts der Dosiereinrichtung angeordnet ist.

Gemäß einer Weiterbildung der Erfindung ist vorgesehen, dass die Schallquelle mit ihrer Schallauslassöffnung schräg, vorzugsweise senkrecht zu einer Abgasströmung des Abgases in den Abgasleitungsabschnitt mündet. Dabei bezieht sich die Strömungsrichtung des Abgases insbesondere auf eine bestimmungsgemäße Strömungsrichtung im Bereich einer Strecke innerhalb des Abgasleitungsabschnitts, entlang welcher eine Durchmischung der Flüssigkeit mit dem Abgas stattfindet. Alternativ ist es möglich, dass die Schallquelle mit ihrer Schallaustrittsöffnung parallel zu der Abgasströmung des Abgases in den Abgasleitungsabschnitt mündet. Beide möglichen Orientierungen der Schallauslassöffnung ermöglichen eine effiziente Durchmischung der Flüssigkeit mit dem Abgasstrom, wobei insbesondere abhängig von dem zur Verfügung stehenden Bauraum entweder die schräge oder senkrechte, oder die parallele Orientierung gewählt werden kann.

Gemäß einer Weiterbildung der Erfindung ist vorgesehen, dass in dem Abgasleitungsabschnitt stromabwärts der Dosiereinrichtung wenigstens ein mechanisches Mischelement zur Durchmischung der Flüssigkeit mit dem Abgas angeordnet ist. Es ist also durchaus möglich, zusätzlich zu der Schallquelle auch ein mechanisches Mischelement vorzusehen, insbesondere um die Durchmischung der Flüssigkeit mit dem Abgasstrom weiter zu fördern. Dabei kann das Mischelement aber im Vergleich zu einer herkömmlichen Ausbildung, wie sie ohne die Schallquelle verwendet wird, für einen geringeren Abgasgegendruck und insbesondere kleiner ausgelegt sein.

Die Schallquelle ist bevorzugt mit dem wenigstens einen Mischelement zur Schwingungserzeugung an dem Mischelement wirkverbunden, wobei sie insbesondere direkt an dem Mischelement angeordnet oder mechanisch mit dem Mischelement verbunden sein kann. Alternativ oder zusätzlich ist bevorzugt vorgesehen, dass die Schallquelle auf das Mischelement zu dessen Beaufschlagung mit Schallwellen ausgerichtet ist. Jedenfalls ist es möglich, dass mithilfe der Schallquelle an dem Mischelement Schwingungen erzeugt werden können, oder dass das Mischelement zu Schwingungen angeregt werden kann, was eine Durchmischung der Flüssigkeit mit dem Abgasstrom im Bereich des Mischelements zusätzlich fördert.

Die Aufgabe wird auch gelöst, indem eine Brennkraftmaschine gemäß Anspruch 6 geschaffen wird, die einen Abgasstrang aufweist, wobei der Abgasstrang eine Mischeinrichtung nach einem der zuvor beschriebenen Ausführungsbeispiele aufweist. Insbesondere weist der Abgasstrang bevorzugt den Abgasleitungsabschnitt - insbesondere als Teil des Abgasstrangs - der Mischeinrichtung auf. In Zusammenhang mit der Brennkraftmaschine ergeben sich insbesondere die Vorteile, die bereits in Zusammenhang mit der Mischeinrichtung erläutert wurden.

Gemäß einer Weiterbildung der Erfindung ist vorgesehen, dass stromabwärts der Mischeinrichtung ein Abgasnachbehandlungselement angeordnet ist. Insbesondere dient die Mischeinrichtung dabei der Einmischung einer Flüssigkeit in den Abgasstrom, welche in dem nachgeschalteten Abgasnachbehandlungselement für die Abgasnachbehandlung verwendet wird. Das Abgasnachbehandlungselement ist bevorzugt ein Oxidationskatalysator, ein SCR-Katalysator, und/oder ein Partikelfilter mit katalytischer Beschichtung, insbesondere mit oxidativ-katalytischer Beschichtung und/oder mit einer katalytischen Beschichtung, die eingerichtet ist zur selektiven katalytischen Reduktion von Stickoxiden. Insbesondere stromaufwärts von solchen Abgasnachbehandlungselementen verwirklichen sich in besonderer Weise die Vorteile der Mischeinrichtung, wobei gerade stromaufwärts solcher Abgasnachbehandlungselemente mittels der hier vorgeschlagenen Mischeinrichtung Bauraum eingespart und/oder ein Abgasgegendruck reduziert werden kann.

Die Aufgabe wird schließlich auch gelöst, indem ein Verfahren zum Einbringen einer Flüssigkeit in einen Abgasstrom - vorzugsweise einer Brennkraftmaschine - gemäß Anspruch 8 geschaffen wird, wobei eine Flüssigkeit in einen Abgasstrom eingebracht wird, und wobei die Flüssigkeit mit dem Abgas in dem Abgasstrom durch Schall, insbesondere durch Infraschall, vermischt wird. In Zusammenhang mit dem Verfahren ergeben sich insbesondere die bereits in Zusammenhang mit der Mischeinrichtung und/oder der Brennkraftmaschine beschriebenen Vorteile.

Gemäß einer Weiterbildung der Erfindung ist vorgesehen, dass die Schallquelle in Abhängigkeit von einer Aktivierung einer Dosiereinrichtung zur Einbringung der Flüssigkeit aktiviert wird. Die Schallquelle wird bevorzugt gemeinsam mit der Dosiereinrichtung aktiviert, oder sie wird in zeitlichem Zusammenhang mit der Aktivierung der Dosiereinrichtung derart aktiviert, dass die Vermischung der eingebrachten Flüssigkeit mit dem Abgasstrom durch die Schallquelle gefördert wird.

Es ist möglich, dass die Schallquelle permanent aktiviert gehalten wird. Dies ist insbesondere dann vorteilhaft, wenn auch die Dosiereinrichtung dauerhaft zur Eindosierung von Flüssigkeit angesteuert wird. Alternativ oder zusätzlich ist es möglich, dass die Schallquelle gleichzeitig mit der Dosiereinrichtung aktiviert wird. Dies erweist sich insbesondere als vorteilhaft bei einem intermittierenden Betrieb der Dosiereinrichtung, wobei eine effektive Durchmischung der eindosierten Flüssigkeit mit dem Abgasstrom insbesondere dann angestrebt wird, wenn die Dosiereinrichtung zur Eindosierung der Flüssigkeit in den Abgasstrom aktiviert wird.

Es ist aber auch möglich, dass die Schallquelle mit zeitlicher Verzögerung relativ zur Aktivierung der Dosiereinrichtung aktiviert wird. Dies ist insbesondere dann günstig, wenn sich bezüglich der Eindosierung der Flüssigkeit einerseits und deren Vermischung mit dem Abgasstrom andererseits eine Totzeit ergibt, wobei es insbesondere günstig sein kann, eine erste Verteilung von Flüssigkeitströpfchen im Abgasstrom abzuwarten, bevor die Schallquelle zur weiteren Homogenisierung der Durchmischung aktiviert wird.

Die Beschreibung der Mischeinrichtung sowie der Brennkraftmaschine einerseits und des Verfahrens andererseits sind komplementär zueinander zu verstehen. Merkmale der Mischeinrichtung und/oder der Brennkraftmaschine, die explizit oder implizit in Zusammenhang mit dem Verfahren erläutert wurden, sind bevorzugt einzeln oder miteinander kombiniert Merkmale eines bevorzugten Ausführungsbeispiels der Mischeinrichtung und/oder der Brennkraftmaschine. Verfahrensschritte, die explizit oder implizit in Zusammenhang mit der Mischeinrichtung oder der Brennkraftmaschine erläutert wurden, sind bevorzugt einzeln oder miteinander kombiniert Schritte einer bevorzugten Ausführungsform des Verfahrens. Dieses zeichnet sich bevorzugt durch wenigstens einen Verfahrensschritt aus, der durch wenigstens ein Merkmal eines erfindungsgemäßen oder bevorzugten Ausführungsbeispiels der Mischeinrichtung und/oder der Brennkraftmaschine bedingt ist. Die Brennkraftmaschine und/oder die Mischeinrichtung zeichnet/zeichnen sich bevorzugt durch wenigstens ein Merkmal aus, welches durch wenigstens einen Schritt einer erfindungsgemäßen oder bevorzugten Ausführungsform des Verfahrens bedingt ist.

Die Erfindung wird im Folgenden anhand der Zeichnung näher erläutert. Dabei zeigen:
- Figur 1: eine schematische Darstellung eines ersten Ausführungsbeispiels einer Brennkraftmaschine mit einer Mischeinrichtung, und
- Figur 2: eine schematische Darstellung eines zweiten Ausführungsbeispiels einer Brennkraftmaschine mit einer Mischeinrichtung.

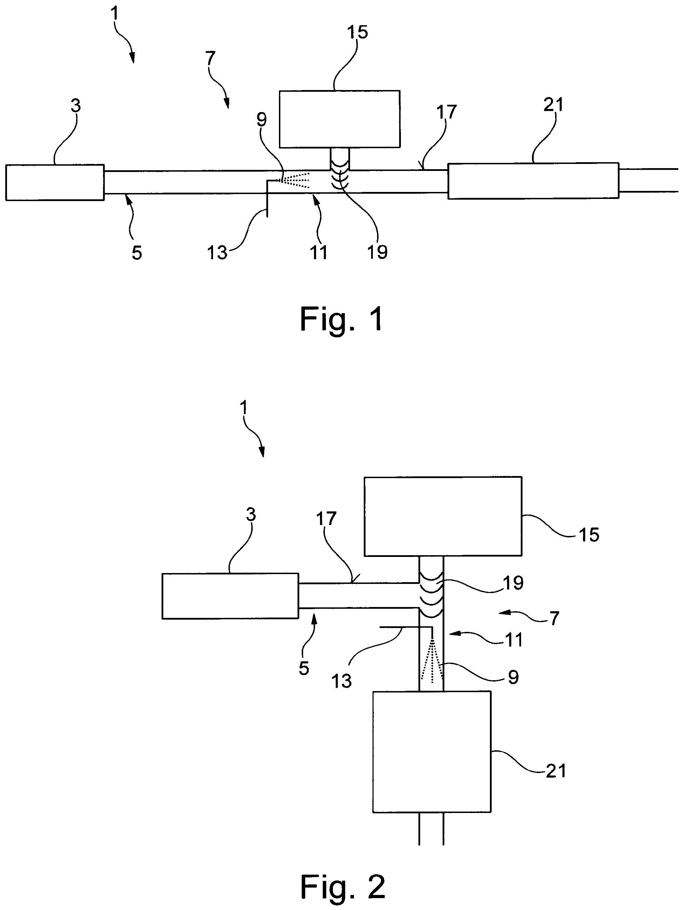

**Fig. 1** zeigt eine schematische Darstellung eines ersten Ausführungsbeispiels einer Brennkraftmaschine 1 mit einem Motorblock 3 und einem Abgasstrang 5, wobei der Abgasstrang 5 eine Mischeinrichtung 7 zur Einbringung einer schematisch angedeuteten Flüssigkeit 9 in einen Abgasstrom aufweist, der im Betrieb des Abgasstrangs 5, insbesondere im Betrieb der Brennkraftmaschine 1, in dem Abgasstrang 5 strömt.

Die Mischeinrichtung 7 weist einen Abgasleitungsabschnitt 11 auf, der eingerichtet ist zur Führung von Abgas einer Verbrennung - insbesondere einer in wenigstens einem Brennraum der Brennkraftmaschine 1 stattfindenden Verbrennung - entlang des Abgasleitungsabschnitts 11. Die Mischeinrichtung 7 weist außerdem eine Dosiereinrichtung 13 auf, die angeordnet und eingerichtet ist zur Eindosierung der Flüssigkeit 9 in den Abgasleitungsabschnitt 11. Die Flüssigkeit 9 kann insbesondere als Reduktionsmittel, als Brennstoff, als Wasser oder wässrige Lösung, oder in anderer geeigneter Weise ausgebildet ist. Die Dosiereinrichtung kann insbesondere als Injektor, Zerstäuber oder dergleichen ausgebildet sein.

Die Mischeinrichtung 7 weist eine Schallquelle 15 auf, die derart relativ zu dem Abgasleitungsabschnitt 11 und der Dosiereinrichtung 13 angeordnet ist, dass eine Durchmischung der Flüssigkeit 9 mit dem in dem Abgasleitungsabschnitt 11 strömenden Abgas durch von der Schallquelle 15 emittierten Schall gefördert wird, wenn die Schallquelle 15 Schall emittiert. Dadurch kann eine besonders intensive und homogene Durchmischung der Flüssigkeit 9 mit dem Abgas erreicht werden, sodass eine hierfür vorgesehene Mischstrecke kürzer als bisher bekannt ausgebildet sein kann, wobei gegebenenfalls auf mechanische Mischelemente verzichtet werden kann, oder wobei mechanische Mischelemente für einen geringeren Abgasgegendruck ausgelegt werden können, als dies bisher bei herkömmlichen Mischeinrichtungen der Fall ist.

Die Schallquelle 15 ist als Infraschallquelle ausgebildet. Besonders bevorzugt ist die Schallquelle 15 als Schallhorn oder als Lautsprecher, insbesondere mit temperaturbeständiger Metallmembran, ausgebildet.

Die Schallquelle 15 ist bevorzugt an einer Wandung 17 des Abgasleitungsabschnitts 11 angeordnet, oder sie mündet mit einer Schallauslassöffnung 19 in den Abgasleitungsabschnitt 11, insbesondere - wie hier dargestellt - stromabwärts der Dosiereinrichtung 13, oder - alternativ oder zusätzlich - stromaufwärts der Dosiereinrichtung 13.

Bei dem in Figur 1 dargestellten, ersten Ausführungsbeispiel ist die Schallquelle 15 mit ihrer Schallauslassöffnung 19 senkrecht zu einer Abgasströmungsrichtung des Abgases in dem Abgasleitungsabschnitt 11 orientiert. Der Abgasstrom strömt in der Darstellung gemäß Figur 1 hier insbesondere in horizontaler Richtung, nämlich von links nach rechts entlang des Abgasleitungsabschnitts 11.

Es ist möglich, dass in dem Abgasleitungsabschnitt 11 stromabwärts der Dosiereinrichtung 13 wenigstens ein mechanisches Mischelement zur Durchmischung der Flüssigkeit 9 mit dem Abgas angeordnet ist. Dabei kann die Schallquelle 15 mit dem wenigstens einen mechanischen Mischelement zur Schwingungserzeugung an dem Mischelement wirkverbunden sein. Alternativ oder zusätzlich ist es möglich, dass die Schallquelle 15 auf das Mischelement ausgerichtet ist, so dass dieses von der Schallquelle 15 mit Schallwellen beaufschlagt werden kann.

Es zeigt sich noch, dass stromabwärts der Mischeinrichtung 7 hier ein Abgasnachbehandlungselement 21 in dem Abgasstrang 5 angeordnet ist. Dabei kann es sich um einen Oxidationskatalysator, um einen SCR-Katalysator und/oder um einen Partikelfilter mit katalytischer Beschichtung, insbesondere mit oxidativ-katalytischer Beschichtung, oder mit SCR-aktiver katalytischer Beschichtung handeln.

**Fig. 2** zeigt eine schematische Darstellung eines zweiten Ausführungsbeispiels der Brennkraftmaschine 1 mit der Mischeinrichtung 7. Gleiche und funktionsgleiche Elemente sind mit gleichen Bezugszeichen versehen, sodass insofern auf die vorangegangene Beschreibung verwiesen wird. Dabei ist die Schallquelle 15 bei dem zweiten Ausführungsbeispiel mit ihrer Schallauslassöffnung 19 parallel zu der Abgasströmungsrichtung des Abgases in dem Abgasleitungsabschnitt 11 ausgerichtet. Die Abgasströmungsrichtung erstreckt sich entlang des Abgasleitungsabschnitts 11 im Bereich der Dosiereinrichtung 13 in der Figur insbesondere in vertikaler Richtung, nämlich von oben nach unten.

Die Brennkraftmaschine 1 und insbesondere die Mischeinrichtung 7 wird/werden so betrieben, dass die Flüssigkeit 9 in den Abgasstrom eindosiert wird, wobei sie mit dem Abgas in dem Abgasstrom durch Infraschall vermischt wird. Die Schallquelle 15 wird dabei bevorzugt in Abhängigkeit von einer Aktivierung der Dosiereinrichtung 13 zur Eindosierung der Flüssigkeit 9 aktiviert, insbesondere permanent, oder gleichzeitig mit der Dosiereinrichtung 13, oder mit bestimmter zeitlicher Verzögerung zu dieser.

Insgesamt zeigt sich, dass mittels der hier vorgeschlagenen Mischeinrichtung 7, der Brennkraftmaschine 1 und dem Verfahren eine besonders effiziente, homogene Vermischung einer Flüssigkeit mit Abgas ermöglicht wird, wobei eine Mischstrecke mit geringerem Bauraum und verringertem Abgasgegendruck als bisher bekannt ausgestaltet sein kann.

## Patentansprüche

1. Mischeinrichtung (7) zur Einbringung einer Flüssigkeit (9) in einen Abgasstrom, mit
- einem Abgasleitungsabschnitt (11), eingerichtet zur Führung von Abgas entlang des Abgasleitungsabschnitts (11),
- einer Dosiereinrichtung (13), angeordnet und eingerichtet zur Einbringung einer Flüssigkeit (9) in den Abgasleitungsabschnitt (11), und mit
- wenigstens einer Schallquelle (15), die derart relativ zu dem Abgasleitungsabschnitt (11) und der Dosiereinrichtung (13) angeordnet ist, dass
- eine Durchmischung der in den Abgasleitungsabschnitt (11) mittels der Dosiereinrichtung (13) eingebrachten Flüssigkeit (9) mit dem in dem Abgasleitungsabschnitt (11) strömenden Abgas durch von der wenigstens einen Schallquelle (15) emittierten Schall gefördert wird, wenn die wenigstens eine Schallquelle (15) Schall emittiert,
**dadurch gekennzeichnet, dass**
- die wenigstens eine Schallquelle (15) als Infraschallquelle ausgebildet ist.

2. Mischeinrichtung (7) nach Anspruch 1, **dadurch gekennzeichnet, dass** die wenigstens eine Schallquelle (15) als Schallhorn oder als Lautsprecher ausgebildet ist.

3. Mischeinrichtung (7) nach einem der vorhergehenden Ansprüche, **dadurch gekennzeichnet, dass** die wenigstens eine Schallquelle (15)
a) an einer Wandung (17) des Abgasleitungsabschnitts (11) angeordnet ist, oder
b) mit einer Schallauslassöffnung (19) in den Abgasleitungsabschnitt (11) mündet.

4. Mischeinrichtung (7) nach einem der vorhergehenden Ansprüche, **dadurch gekennzeichnet, dass** die wenigstens eine Schallquelle (15) mit der Schallauslassöffnung (19)
a) schräg, vorzugsweise senkrecht, oder
b) parallel
zu einer Abgasströmungsrichtung des Abgases in den Abgasleitungsabschnitt (11) mündet.

5. Mischeinrichtung (7) nach einem der vorhergehenden Ansprüche, **dadurch gekennzeichnet, dass** in dem Abgasleitungsabschnitt (11) stromabwärts der Dosiereinrichtung (13) wenigstens ein mechanisches Mischelement zur Durchmischung der Flüssigkeit (9) mit dem Abgas angeordnet ist, wobei die wenigstens eine Schallquelle (15)
a) mit dem wenigstens einen Mischelement wirkverbunden ist, so dass Schwingungen an dem Mischelement mittels der wenigstens einen Schallquelle (15) erzeugbar sind, und/oder
b) auf das wenigstens eine Mischelement zu dessen Beaufschlagung mit Schallwellen ausgerichtet ist.

6. Brennkraftmaschine (1) mit einem Abgasstrang (5), **dadurch gekennzeichnet, dass** der Abgasstrang (5) eine Mischeinrichtung (7) nach einem der Ansprüche 1 bis 5 aufweist.

7. Brennkraftmaschine (1) nach Anspruch 6, **dadurch gekennzeichnet, dass** stromabwärts der Mischeinrichtung (7) ein Abgasnachbehandlungselement (21), insbesondere ein Oxidationskatalysator, ein SCR-Katalysator, und/oder ein Partikelfilter mit katalytischer Beschichtung, angeordnet ist.

8. Verfahren zum Einbringen einer Flüssigkeit (9) in einen Abgasstrom, wobei
- eine Flüssigkeit (9) in einen Abgasstrom eingebracht wird, und wobei
- die Flüssigkeit (9) mit dem Abgas in dem Abgasstrom durch Infraschall vermischt wird.

9. Verfahren nach Anspruch 8, **dadurch gekennzeichnet, dass** wenigstens eine Schallquelle (15), die angeordnet und eingerichtet ist, um Schall in den Abgasstrom einzukoppeln, in Abhängigkeit von einer Aktivierung einer Dosiereinrichtung (13) zur Einbringung der Flüssigkeit (9) aktiviert wird.

## Claims

1. A mixing device (7) for introducing a liquid (9) into an exhaust gas stream, comprising
- an exhaust gas line section (11), configured for conducting exhaust gas along the exhaust gas line section (11),
- a metering device (13), arranged and configured for introducing a liquid (9) into the exhaust gas line section (11), and comprising
- at least one sound source (15), which is arranged relative to the exhaust gas line section (11) and the metering device (13) in such a way that
- a mixing of the liquid (9), which is introduced into the exhaust gas line section (11) by means of the metering device (13), with the exhaust gas, which flows in the exhaust gas line section (11), is promoted by means of sound, which is emitted by the at least one sound source (15), when sound is emitted by the at least one sound source (15),
**characterised in that**
- the at least one sound source (15) is configured as infrasound source.

2. The mixing device (7) according to claim 1, **characterised in that** the at least one sound source (15) is configured as acoustic horn or as loudspeaker.

3. The mixing device (7) according to any one of the preceding claims, **characterised in that** the at least one sound source (15)
a) is arranged at a wall (17) of the exhaust gas line section (11), or
b) leads with a sound outlet opening (19) into the exhaust gas line section (11).

4. The mixing device (7) according to any one of the preceding claims, **characterised in that** the at least one sound source (15) leads with the sound outlet opening (19)
a) obliquely, preferably perpendicularly, or
b) parallel
to an exhaust gas flow direction of the exhaust gas into the exhaust gas line section (11).

5. The mixing device (7) according to any one of the preceding claims, **characterised in that** at least one mechanical mixing element for intermixing the liquid (9) with the exhaust gas is arranged in the exhaust gas line section (11) downstream from the metering device (13), wherein the at least one sound source (15)
a) is operatively connected to the at least one mixing element, so that vibrations at the mixing element can be generated by means of the at least one sound source (15),
and/or
b) is oriented towards the at least one mixing element for the application of the latter with sound waves.

6. An internal combustion engine (1) comprising an exhaust gas system (5), **characterised in that** the exhaust gas system (5) has a mixing device (7) according to any one of claims 1 to 5.

7. The internal combustion engine (1) according to claim 6, **characterised in that** an exhaust gas after-treatment element (21), in particular an oxidation catalyst, a SCR catalyst, and/or a particulate filter comprising a catalytic coating, is arranged downstream from the mixing device (7).

8. A method for introducing a liquid (9) into an exhaust gas stream, wherein
- a liquid (9) is introduced into an exhaust gas stream, and wherein
- the liquid (9) is mixed with the exhaust gas in the exhaust gas stream by means of infrasound.

9. The method according to claim 8, **characterised in that** at least one sound source (15), which is arranged and configured to couple sound into the exhaust gas stream, is activated to introduce the liquid (9) as a function of an activation of a metering device (13).

## Revendications

1. Dispositif de mélange (7) pour l'introduction d'un fluide (9) dans un courant de gaz d'échappement, avec
- une section de conduite de gaz d'échappement (11), configurée pour le guidage de gaz d'échappement le long de la section de conduite de gaz d'échappement (11),
- un dispositif de dosage (13), disposé et configuré pour l'introduction d'un fluide (9) dans la section de conduite de gaz d'échappement (11), et avec
- au moins une source sonore (15) qui est disposée par rapport à la section de conduite de gaz d'échappement (11) et au dispositif de dosage (13) de telle sorte que
- un mélange du fluide (9) introduit dans la section de conduite de gaz d'échappement (11) au moyen du dispositif de dosage (13) avec le gaz d'échappement s'écoulant dans la section de conduite de gaz d'échappement (11) est transporté par le son émis par l'au moins une source sonore (15) lorsque l'au moins une source sonore (15) émet du son,
**caractérisé en ce que**
- l'au moins une source sonore (15) est réalisée en tant que source infrasonore.

2. Dispositif de mélange (7) selon la revendication 1, **caractérisé en ce que** l'au moins une source sonore (15) est réalisée en tant qu'avertisseur sonore ou en tant que haut-parleur.

3. Dispositif de mélange (7) selon une des revendications précédentes, **caractérisé en ce que** l'au moins une source sonore (15)
a) est disposée sur une paroi (17) de la section de conduite de gaz d'échappement (11), ou
b) débouche avec une ouverture de sortie sonore (19) dans la section de conduite de gaz d'échappement (11).

4. Dispositif de mélange (7) selon une des revendications précédentes, **caractérisé en ce que** l'au moins une source sonore (15) avec l'ouverture de sortie sonore (19) débouche
a) en biais, de préférence perpendiculairement, ou
b) parallèlement
à une direction d'écoulement de gaz d'échappement du gaz d'échappement dans la section de conduite de gaz d'échappement (11).

5. Dispositif de mélange (7) selon une des revendications précédentes, **caractérisé en ce qu'**au moins un élément de mélange mécanique est disposé dans la section de conduite de gaz d'échappement (11) en aval du dispositif de dosage (13) pour le mélange du fluide (9) avec le gaz d'échappement, dans lequel l'au moins une source sonore (15)
a) est activement connectée à l'au moins un élément de mélange de sorte que des oscillations peuvent être générées sur l'élément de mélange au moyen de l'au moins une source sonore (15), et/ou
b) est orientée vers l'au moins un élément de mélange pour sa sollicitation avec des ondes sonores.

6. Moteur à combustion interne (1) avec une ligne d'échappement (5), **caractérisé en ce que** la ligne d'échappement (5) présente un dispositif de mélange (7) selon une des revendications 1 à 5.

7. Moteur à combustion interne (1) selon la revendication 6, **caractérisé en ce qu'**un élément de traitement postérieur de gaz d'échappement (21), notamment un catalyseur d'oxydation, un catalyseur SCR et/ou un filtre à particules avec revêtement catalytique, est disposé en aval du dispositif de mélange (7).

8. Procédé d'introduction d'un fluide (9) dans un courant de gaz d'échappement, dans lequel
- un fluide (9) est introduit dans un courant de gaz d'échappement, et dans lequel
- le fluide (9) est mélangé avec le gaz d'échappement dans le courant de gaz d'échappement par infrason.

9. Procédé selon la revendication 8, **caractérisé en ce qu'**au moins une source sonore (15) qui est disposée et configurée pour injecter du son dans le courant de gaz d'échappement est activée en fonction d'une activation d'un dispositif de dosage (13) pour l'introduction du fluide (9).
